# FASCICULE DE BREVET EUROPEEN

(11) **EP 0 544 960 B1**
(45) Date de publication et mention de la délivrance du brevet: **10.01.1996**
(21) Numéro de dépôt: 91402964.0
(22) Date de dépôt: 06.11.1991
(51) Int. Cl.: B23B 29/02

(54) **Porte-outil à aléser**
Bohrwerkzeughalter
Boring tool holder

(43) Date de publication de la demande: 09.06.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Barbaric, Joseph François, F-91220 Bretigny s/Orge (FR); Gendron, Yvon, F-75003 Paris (FR); Muccioli, Serge Roger Yves, F-92100 Boulogne (FR); Rouge, Gilles, F-91410 Dourdan (FR); Villalobos, Juan, F-91760 Itteville (FR); Harang, Pierre Lucien Maurice, F-91540 Mennecy (FR)

(56) Documents cités:
- DE-A- 2 713 529
- DE-A- 3 300 803
- US-A- 4 023 451

## Description

L'invention concerne le domaine de la machine-outil et plus particulièrement celui des porte-outils à aléser comprenant les caractéristiques de la première partie de la revendication 1 (voir DE-A-33 00 803).

Dans ce domaine il est classique de réaliser des barres d'alésages éventuellement réglables, pour effectuer des alésages précis dans des barreaux pleins.

On peut réaliser par exemple une passe de défonçage en passe avant puis une pas se de finition en passe arrière. par exemple en utilisant deux plaquettes de coupe montées sur un même porte-outils, réglable de quelques millimètres pour utiliser d'abord l'une, puis la seconde des plaquettes de coupe.

Mais en matière d'alésage, il existe un type d'opérations dans lequel on est confronté à un problème un peu différent. Ainsi, lorsqu'on veut aléser des portées cylindriques de grand diamètre dans une cavité, on est limité en diamètre maximal d'usinage, par le diamètre de l' ouverture axiale d'introduction de l'outil dans la cavité.

En effet, il faut d'abord que l'encombrement hors tout de l'outil monté sur son porte-outil soit inférieur au diamètre d'alésage de l'ouverture d'introduction, et ensuite, condition encore plus contraignante, que la course d'usinage soit également inférieure à ce diamètre de l'ouverture d'introduction de l'outil.

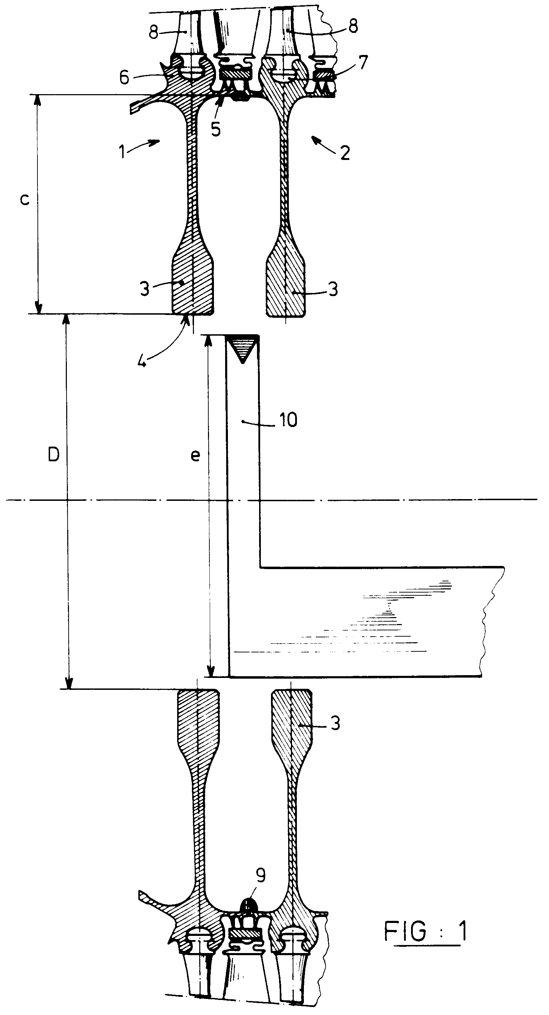

On est confronté à ce problème par exemple dans le cas de la réalisation des tambours de rotors des compresseurs de turbomachines actuelles dont un exemple est montré à la figure 1 à titre d'exemple de l'état de la technique.

Dans l'exemple donné ici, deux étages 1, 2 de rotor de compresseur haute pression d'un turboréacteur sont assemblés par soudage inertiel. Chaque étage est formé d'un disque comportant intérieurement une partie circulaire renflée 3 en forme de bulbe délimitant un alésage interne 4, et extérieurement un voile 5 au niveau duquel est effectué le soudage des deux disques entre-eux. Chaque disque comporte également une jante 6 comprenant une rainure circulaire 7 dans laquelle sont engagées des aubes 8.

Après soudage par friction inertielle des deux disques entre eux, il s'est formé un cordon de matériau déformé, ou cordon de soudure (montré en 9 dans la partie basse de la figure 1) qu'il faut usiner au moyen d'un outil à aléser.

Dans le cas de la figure 1, la course "c" de l'outil est inférieure au diamètre D de l'alésage 4, et il est possible de faire pénétrer dans ce dernier un outil 10 dont la longueur transversale ou encombrement "e", tout en étant supérieure à la course "c" sera inférieure au diamètre D de l'alésage 4.

Dans certaines turbomachines actuelles, dont la vitesse de rotation est élevée, on a diminué le moment d'inertie du rotor en réalisant des disques à alésage interne de faible diamètre de telle sorte que le rayon de giration du disque soit le plus faible possible.

Dans ce type de rotor on est donc amené à avoir une course "c" d'usinage et un encombrement "e" de l'outil, supérieur au diamètre D de l'alésage. Il n'est donc plus possible d'utiliser des outils tels que celui schématisé à la figure 1.

Un des buts de l'invention est donc de réaliser un porte-outil à aléser ayant un encombrement, lors de l'introduction dans le tambour, inférieur au diamètre de l'alésage du tambour mais permet tant néanmoins d'usiner des cordons de soudure situés sur un diamètre supérieur à trois fois la valeur du diamètre de l'alésage interne du tambour.

Un but de l'invention est donc de réaliser un porte-outil dont le bras porte-plaquette soit repliable de façon à pouvoir pénétrer dans l'alésage, puis déployable, une fois l'outil en position entre deux disques, pour que la course de l'outil permette d'atteindre le diamètre à aléser.

Dans ce but un porte-outil à aléser pour l'alésage de portée cylindrique de grands diamètres à l'intérieur de tambours possède une ouverture axiale d'introduction de l'outil de diamètre beaucoup plus faible que celui de l'alésage à effecteur, porte-outil comportant de façon connue un bras porte-plaquette transversal par rapport à la broche de fixation du porte-outil sur une tourelle de machine-outil.

Comme il est connu par DE-A-3 300 803, le bras porte-plaquette est porté par un support intermédiaire solidaire de la broche, support sur lequel il est monté tournant entre d'une part une première position où le bras est replié sous ledit support pour l'introduction du porte-outil dans le tambour au travers de l'ouverture axiale de ce dernier et d'autre part une position d'usinage où le bras est déplié et fixé transversalement à la broche.

Le but de l'invention est d'améliorer et de faciliter la réalisation des moyens de pivotement et de fixation du support et du bras porte-plaquette.

Dans ce but, le porte-outil est caractérisé en ce que le support intermédiaire a une forme générale cylindrique et il est fixé à l'extrémité de la broche, celle-ci étant positionnée de façon excentrée par rapport à l'axe de symétrie générale du support et en ce que le bras porte plaquette est monté tournant sur le support intermédiaire autour d'un axe épaulé, ledit axe étant placé dans un plan diamétral du support, contenant l'axe de la broche et à l'opposé de celui-ci par rapport à l'axe de symétrie du support intermédiaire.

D'autres caractéristiques des modes de réalisation de l'invention seront précisées en regard du complément de description qui va suivre et des planches de dessins annexées parmi lesquelles :
- la figure 1 illustre un outillage d' alésage selon l'état de la technique dont il a été question plus haut en préambule ;
- la figure 2 est une vue en perspective d'un mode de réalisation préférentiel de l'invention ;
- la figure 3 est une vue de face du porte-outil de la figure 2, en position d' usinage ;
- la figure 4 est une vue de dessous de la figure 3 ;
- la figure 5 est une vue de des sous du même porte-outil avec le bras porte-plaquette replié, c'est à dire dans la position d'introduction de l'outil dans le tambour à usiner.

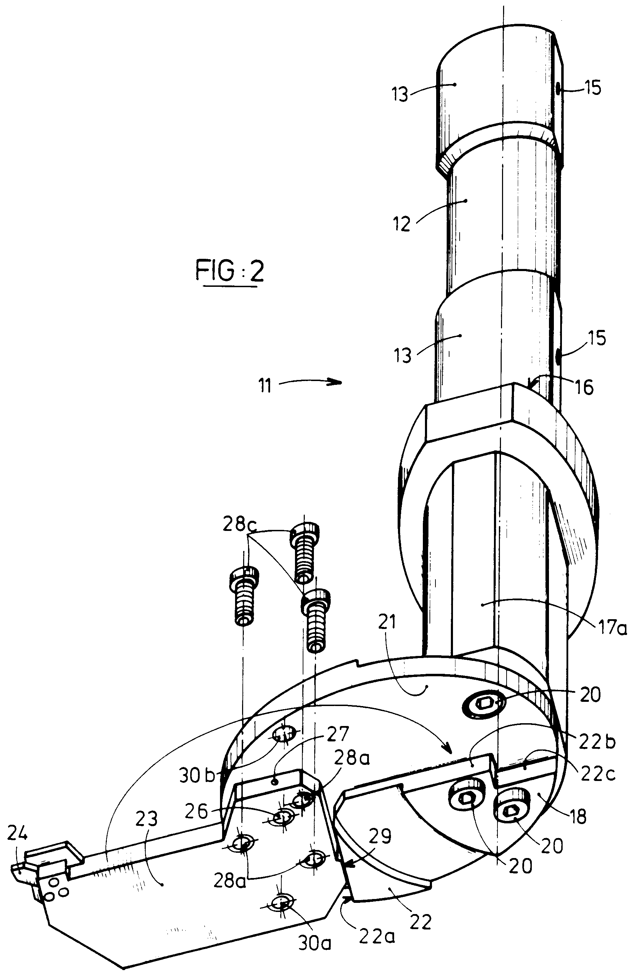

Si l'on se réfère aux figures 2 à 5, le porte-outil 11 réalisant l'invention comporte une broche 12 munie de deux portées cylindriques 13 de positionnement dans le nez de la machine outil, par exemple un tour vertical. Les portées 13 comportent un méplat 14 pour l'orientation du porte-outil et deux centrages coniques 15 pour fixation du porte-outil mis en butée en 16 sur le nez de la machine outil.

En-dessous de cette butée 16, la broche est prolongée par un corps 17 dont la section a une forme générale ovoïde avec des petits côtés 17a tronqués et un méplat 17b du même côté que le méplat 14 de la broche.

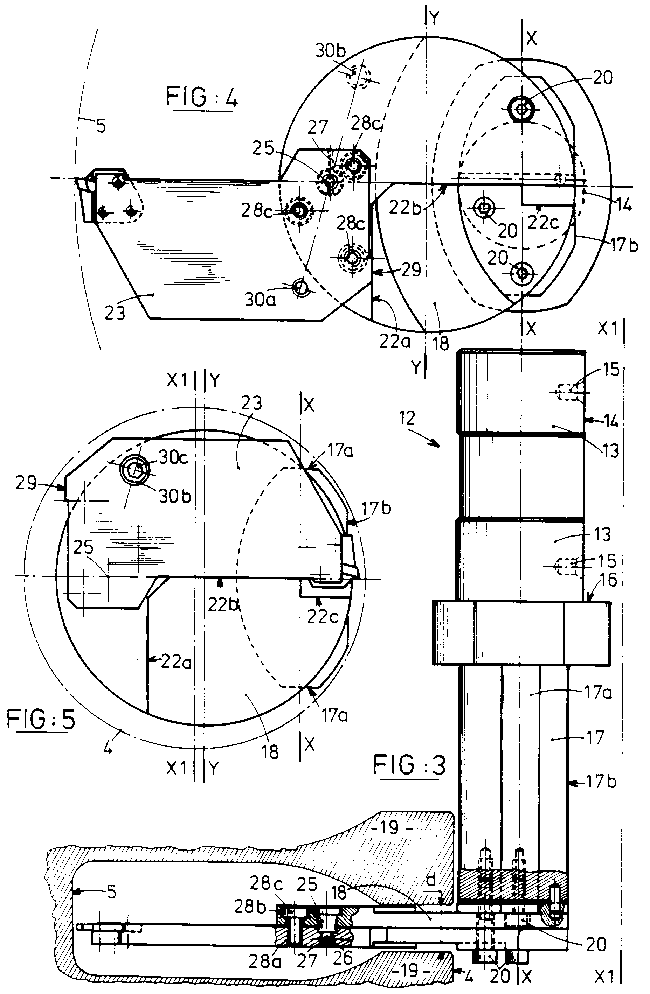

Sous ce corps 17 est fixé par trois vis 20 un support intermédiaire 18 de forme cylindrique et d'épaisseur faible. Cette dernière doit être inférieure à la distance "d" séparant les bulbes 19 de deux disques adjacents du tambour à usiner (voir figure 3).

La face inférieure du support 18 comporte une zone plane 21 sur sensiblement les trois quarts de la surface du support. Dans cette zone le support a une épaisseur environ égale à la moitié de son épaisseur totale.

Le quart restant 22 de la surface inférieure apparaît donc en surépaisseur par rapport à la surface 21. La surface 22 est délimitée par deux faces verticales 22a et 22b perpendiculaires, la face 22b étant disposée diamétralement sur le support.

A la partie arrière de la face 22b est usiné un dégagement 22c.

Comme on le voit aux figures 2 à 5, le corps 17 de la broche est fixé par les vis 20 d'une façon excentrée par rapport à l'axe du cylindre formant le support intermédiaire et symétriquement par rapport au diamètre contenant la face 22b de la zone 22. La position excentrée du corps 17 est telle que le méplat 17b du corps 17 est tangent au bord cylindrique du support 18, dans la partie arrière de celui-ci.

L'outil comporte également un bras 23 qui porte la plaquette de coupe 24. Ce bras est monté tournant autour d'un axe 25, disposé dans le plan diamétral contenant la face 22b et l'axe XX de la broche, et à l'opposé de celui-ci par rapport au centre Y du support intermédiaire.

L'axe 25 est un axe épaulé monté sur la face supérieure du support dans un perçage de celui-ci et vissé dans un taraudage 26 du bras. Il est maintenu en position par une goupille transversale 27 disposée dans un perçage réalisé dans l'épaisseur du bras 23.

Le bras 23 comporte trois taraudages 28a qui, en position déployée du bras 23, sont situés dans le prolongement de trois perçages 28b du support, dans lesquels on vient visser trois vis 28c afin de maintenir fixe le bras en position d'usinage.

Le bras 23 comporte également une partie arrière plane 29, qui, en position d'usinage du bras, est en butée contre la face 22a de la partie épaisse 22 du support intermédiaire. Ceci est réalisé afin que l'effort de coupe soit supporté par cette partie 22 du support, et non par les vis de fixation 28c du bras sur le support.

Enfin le bras comporte un taraudage 30a situé dans une position telle que, dans la position repliée du bras, il soit situé face à un perçage 30b du support intermédiaire. Cet ensemble 30a, 30b servira à fixer par une vis 30c le bras dans sa position repliée.

Pour introduire le porte-outil dans l'alésage 4 du disque, le bras porte-plaquette 23 est replié dans la position de la figure 5. Il est fixé sous le support intermédiaire 18 par la vis 30c. La plaquette d'usinage et sa plaque de maintien sont logés dans le dégagement 22c du support.

Comme on le voit à la figure 5, le support 18 et son bras 23 replié sont inscrits dans un cercle de diamètre plus faible que celui de l'alésage 4 du tambour à usiner. L'ensemble 18-23 peut donc pénétrer dans l'alésage 4 (dont l'axe X1 est représenté aux figures 3 à 5).

Lors que le support 18 est arrivé face à l'espace d'interdisques 19, l'opérateur dévisse la vis 30c et l'extrait du tambour au moyen par exemple d'une clé aimantée.

Ensuite, il déplie le bras 23 et le fixe en position d'usinage (cf figure 3) au moyen des trois vis 28c.

On met ensuite la pièce en rotation et on peut approcher l'outil du voile 5 du tambour afin de réaliser l'alésage souhaité.

Comme on le voit aux figures 3 et 4 le diamètre de l'alésage ainsi usiné est ici supérieur à 3 fois la valeur du diamètre de l'alésage interne 4 des disques du tambour.

A titre d'exemple, on a ainsi usiné au moyen de l'outil décrit ci-dessus des alésages ayant un diamètre de 602 mm, alors que l'alésage interne 4 du tambour n'excédait pas 186 mm.

Les nombreux essais réalisés ont permis de montrer qu'un tel outil ne subissait pas de vibrations importantes ni en usinage en plongée, ni en chariotage et que l'état de surface du cordon usiné était bon.

Par une succession de percages dans la broche, dans le support intermédiaire et dans le bras porte-plaquette, qui se correspondent en position déployée, il est possible de conduire commodément un liquide lubrifiant au plus près de l'arête de coupe.

Enfin, il est possible de donner au bras porte-plaquette, un profil coudé de manière à permettre un usinage de zones axialement décalées par rapport au support intermédiaire, notamment pour accéder dans des fonds d'empochements circulaires.

## Revendications

1. Porte-outil à aléser pour l'alésage de portées cylindriques (5) de grands diamètres à l'intérieur de tambours (1-2-3-19) possédant une ouverture axiale (4) d'introduction de l'outil, de diamètre beaucoup plus faible que celui de l'alésage à effectuer, porte-outil (11) comportant un bras (23) porte-plaquette transversal par rapport à la broche (12) de fixation du porte-outil (11) sur une tourelle de machine-outil, le bras (23) porte-plaquette etant porté par un support intermédiaire (18) solidaire de la broche (12), dans lequel le bras (23) est monté tournant entre, d'une part, une première position où le bras (23) est replié sous ledit support (18) pour l'introduction du porte-outil dans le tambour au travers de l'ouverture axiale (4) de ce dernier et, d'autre part, une position d'usinage où le bras (23) est déplié et fixé transversalement à la broche (12), caractérisé en ce que le support intermédiaire (18) a une forme généralement circulaire et est fixé à l'extrémité de la broche (12), ladite broche étant positionnée de façon excentrée par rapport à l'axe de symétrie générale du support (18), et en ce que le bras (23) porte-plaquette est monté tournant sur le support intermédiaire (18) autour d'un axe épaulé (25) dudit support, ledit axe (25) étant placé dans un plan diamétral du support, contentant l'axe (XX) de la broche et à l'opposé de celui-ci par rapport au centre (Y) du support intermédiaire (18).

2. Porte-outil à aléser selon la revendication 1, caractérisé en ce qu'il comporte des moyens de fixation (28a, 28b, 28c ; 30a, 30b, 30c) du bras (23) porte-plaquette sur le support (18) dans les deux positions, d'introduction et d'usinage, du bras.

3. Porte-outil à aléser selon la revendication 2, caractérisé en ce que lesdits moyens de fixation sont constitués par des vis (28c, 30c) disposées dans des logements (28b, 30b) du support et vissées dans des taraudages correspondants (28a, 30a) du bras (23) porte-plaquette.

4. Porte-outil à aléser selon l'une quelconque des revendications 1 à 3 caractérisé en ce qu'il comporte une portée d'appui (22a) verticale et plane contre laquelle est en appui une butée arrière (29) du bras porte-plaquette dans sa position d'usinage.

5. Porte-outil à aléser selon l'une quelconque des revendications 1 à 4 caractérisé en ce que le support intermédiaire comporte un dégagement arrière (22c) apte à recevoir la plaquette, dans la position repliée du bras (23) porte-plaquette de telle sorte que lors de l'introduction du porte-outil dans la pièce à usiner, le bras (23) soit entièrement effacé sous le support intermédiaire.

6. Porte-outil à aléser selon l'une quelconque des revendications 1 à 5 caractérisé par une succession de perçages dans la broche, dans le support intermédiaire et dans le bras qui se correspondent en position déployée pour conduire un liquide lubrifiant au plus près de l'arête de coupe.

## Claims

1. A boring tool holder for boring large-diameter cylindrical areas (5) inside drums (1, 2, 3, 19) formed with an axial tool entry aperture (4) of much smaller diameter than the subsequent bore, the tool holder (11) comprising a cutter arm (23) which extends transversely of the spindle (12) for securing the tool holder (11) to a machine tool turret, the cutter arm (23) being carried by an intermediate support (18) rigidly secured to to the spindle (12), the cutter arm (23) being so mounted in the intermediate support (18) as to be rotatable between a first position, in which the cutter arm (23) is folded below the suppport (18) for introduction of the tool holder into the drum through the axial aperture (4) therein, and a machining position, in which the cutter arm (23) is unfolded and secured transversely to the spindle (12), characterized in that the intermediate support (18) has a generally circular shape and is secured to the end of the spindle (12), the same being positioned eccentrically of the general axis of the support (18), and the cutter arm (23) is mounted on the intermediate support (18) for rotation around a shouldered pivot (25) thereof, the pivot (25) being disposed in a diametric plane of the support containing the spindle axis (XX) and being remote from such axis relatively to the centre (Y) of the intermediate support.

2. A boring tool holder according to claim 1, characterised in that it comprises means (28a, 28b, 28c; 30a, 30b, 30c) for securing the cutter arm (23) to the support (18) in the introduction and machining positions of the arm.

3. A boring tool holder according to claim 2, characterised in that the fixing means are screws (28c, 30c) disposed in recesses (28b, 30b) in the support and screwed into corresponding tapped apertures (28a, 30a) in the arm (23).

4. A boring tool holder according to any of claims 1 to 3, characterised in that it comprises a plane vertical abutment surface (22a) abutted by a rear abutment (29) of the cutter arm in the machining position thereof.

5. A boring tool holder according to any of claims 1 to 4, characterised in that the intermediate support is formed with a rear recess (22c) so adapted to receive the cutter in the folded position of the cutter arm (23) that when the tool holder is introduced into the article to be machined the cutter arm (23) is completely retracted below the intermediate support.

6. A boring tool holder according to any of claims 1 to 5, characterised by a sequence of apertures in the spindle, intermediate support and cutter arm which register with one another in the deployed position in order to guide a liquid lubricant to as near the cutting edge as possible.

## Patentansprüche

1. Bohrwerkzeughalter zum Ausbohren zylindrischer Flächen (5) mit grobem Durchmesser im Inneren von Trommeln (1-2-3-19) mit einer axialen Öffnung (4) zum Einführen des Werkzeugs auf, die einen viel kleineren Durchmesser hat als die auszuführende Bohrung, wobei der Werkzeughalter (11) einen Schneidplättchenhalterarm (23) aufweist, der quer zur Befestigungsspindel (12) des Werkzeughalters (11) an einer Werkzeugmaschinendrehbank verläuft, wobei der Schneidplättchenhalterarm (23) von einer mit der Spindel (12) fest verbundenen Zwischenauflage (18) gehalten wird, an der der Arm (23) zwischen einerseits einer ersten Stellung, in der der Arm (23) zum Einführen des Werkzeughalters in die Trommel durch deren axiale Öffnung (4) unter der genannten Auflage (18) zusammengeklappt ist, und andererseits einer Bearbeitungsstellung, in der der Arm (23) ausgeklappt und in Querrichtung an der Spindel (12) befestigt ist, drehbar montiert ist,
dadurch gekennzeichnet,
daß die Zwischenauflage (18) allgemein kreisförmig ist und am Ende der Spindel (12) befestigt ist, wobei die genannte Spindel außermittig zur Hauptsymmetrieachse der Auflage (18) positioniert ist, und daß der Schneidplättchenhalterarm (23) an der Zwischenauflage (18) um eine Achse mit Absatz (25) der genannten Auflage drehbar angebracht ist, wobei die genannte Achse (25) in einer diametralen Ebene der Auflage, die die Spindelachse (XX) enthält, sowie dieser gegenüberliegend, bezogen auf die Mitte (Y) der Zwischenauflage (18), angeordnet ist.

2. Bohrwerkzeughalter nach Anspruch 1, dadurch gekennzeichnet, daß er Befestigungsmittel (28a, 28b, 28c; 30a, 30b, 30c) zum Befestigen des Schneidplättchenhalterarms (23) an der Auflage (18) in den zwei Stellungen des Arms, der Einführstellung und der Bearbeitungsstellung, aufweist.

3. Bohrwerkzeughalter nach Anspruch 2, dadurch gekennzeichnet, daß die genannten Befestigungsmittel aus Schrauben (28c, 30c) bestehen, die in Aufnahmen (28b, 30b) der Auflage angeordnet und in entsprechende Innengewinde (28a, 30a) des Schneidplättchenhalterarms (23) eingeschraubt sind.

4. Bohrwerkzeughalter nach einem der Ansprüche 1 bis 3, dadurch gekennzeichnet, daß er eine senkrechte und ebene Anschlagfläche (22a) aufweist, an der sich ein hinterer Anschlag (29) des Schneidplättchenhalterarms in seiner Bearbeitungsstellung in Anlage befindet.

5. Bohrwerkzeughalter nach einem der Ansprüche 1 bis 4, dadurch gekennzeichnet, daß die Zwischenauflage einen Freistich (22c) aufweist, der geeignet ist, das Plättchen bei eingeklappter Stellung des Schneidplättchenhalterarms (23) aufzunehmen, so daß beim Einführen des Werkzeugs in das zu bearbeitende Stück der Arm (23) vollkommen unter der Zwischenauflage verborgen ist.

6. Bohrwerkzeughalter nach einem der Ansprüche 1 bis 4, gekennzeichnet durch eine Folge von Bohrungen in der Spindel, in der Zwischenauflage und im Schneidplättchenhalterarm, die bei ausgeklappter Stellung aneinander anschließen, um eine Schmierflüssigkeit so nahe wie möglich an die Schneidkante zu bringen.
